# EUROPÄISCHE PATENTSCHRIFT

(11) **EP 0 730 562 B1**
(45) Veröffentlichungstag und Bekanntmachung des Hinweises auf die Patenterteilung: **16.07.1997**
(21) Anmeldenummer: 95932674.5
(22) Anmeldetag: 06.09.1995
(51) Int. Cl.: C02F 3/04, C02F 3/06, A01K 63/04

(54) **WASSERFILTRATION**
WATER FILTRATION
FILTRATION D'EAU

(30) Priorität: 10.09.1994 DE 4433388
(43) Veröffentlichungstag der Anmeldung: 11.09.1996
(73) Patentinhaber: Tlok, Bernd Ch., 21220 Seevetal (DE)
(72) Erfinder: Tlok, Bernd Ch., 21220 Seevetal (DE)
(74) Vertreter: Patentanwälte Wenzel & Kalkoff
(86) Internationale Anmeldenummer: EP9503500
(87) Internationale Veröffentlichungsnummer: WO9607618

(56) Entgegenhaltungen:
- US-A- 4 988 436
- US-A- 5 078 867
- US-A- 5 084 164

## Beschreibung

Die Erfindung betrifft ein Verfahren zum Reinigen von Wasser, wobei zu reinigendes, organische und/oder anorganische Bestandteile enthaltendes Wasser in eine mit Füllkörpermaterial gefüllte Filteranlage gebracht, in dieser unter Bildung eines Rieselstromes gereinigt und anschließend durch mindestens einen Auslaß entfernt wird, sowie eine Vorrichtung zur Durchführung des Verfahrens.

Das genannte Verfahren und danach arbeitende Einrichtungen sind aus der Praxis im Zusammenhang mit sogenannten Rieselfilteranlagen allgemein bekannt. Dabei wird das zu reinigende/filtrierende Wasser über eine Anordnung von Rieselkörpern geleitet. Auf den Rieselkörpern siedeln sich Bakterien an, die Eiweiß und andere organische Verbindungen aus dem Wasser herausfiltern und über bestimmte Stoffwechselvorgänge abbauen. Das Wasser läuft dabei sehr langsam über die Rieselkörper, damit eine bakterielle Reinigung des Wassers in ausreichendem Umfange erfolgen kann. Mit anderen Worten kann man eher von einem Tröpfeln als von einem Fließen, geschweige denn Strömen sprechen. Nachteilig an diesem Verfahren ist, daß, da das Wasser nur sehr langsam durch die Filteranlagen geschickt werden kann, eine entsprechend große Dimensionierung dieser Anlagen erforderlich ist oder durch die Anlage ein erhöhter Wasserumsatz bei kleinerer Dimensionierung der Anlage in einem geschlossenen Wasserkreislauf erfolgen muß, um eine ausreichende Reinigungsleistung zu erzielen. Zudem beruht die Reinigung des Wassers lediglich auf dem bakteriellen Abbau organischer Substanzen. Bis auf die frei werdenden Gase verbleiben anorganische sowie organische Substanzen im Wasser, wobei es in geschlossenen Wasserkreisläufen zur Anhäufung von Giftstoffen kommt; daher ist ein häufiger Wasserwechsel in der Süßwasseraquaristik meistens unumgänglich. Weiterhin ist nachteilig, daß bei den notwendigen langsamen Rieselgeschwindigkeiten die Verdunstung des Wassers sehr hoch und dadurch gegebenenfalls eine Aufsalzung des Wassers die Folge ist. Auch benötigt eine Rieselfilteranlage bis zu ihrer vollen Einsetzbarkeit eine mehrwöchige Anlaufzeit zur Besiedlung der Bakterien auf den Rieselkörpern. Schlieplich wird durch den bakteriellen Abbau organischer Stoffe sehr viel Sauerstoff von den Bakterien benötigt, der dem Wasser selbst entzogen wird. Für die Sauerstoffzuführung wird zusätzlich Energie benötigt. Das abfließende Wasser kann schließlich selbst mit den Ausscheidungen und Stoffwechselprodukten der Bakterien belastet werden.

Ein weiteres Problem von Süßwasseranlagen wie z.B. nährstoffreichen Teichen besteht darin, daß die durch Sonneneinstrahlung hervorgerufene Algenbildung zu erheblichen pH-Schwankungen und zur Sichtbehinderung führt.

DD 241 406 offenbart einen düsenbodenlosen Rieselfilmreaktor zur kontinuierlichen Eliminierung gelöster Wasserinhaltstoffe aus weitestgehend schwebstofffreien Wässern, bei dem der Reaktor mit feinkörnigem Füllkörpermaterial mit einer Dichte wesentlich kleiner als 1 g/cm³ gefüllt ist und eine Einstauhöhenregulierung aufweist. Ein derartiger Reaktor ist wiederum in der Fließgeschwindigkeit begrenzt, da die Reinigung des Wassers auf bakteriellem Wege erfolgt. Des weiteren ist der Reaktor nicht für Wasser geeignet, das größere Mengen Schwebstoffe aufweist, da diese die kleinen Füllkörper zusetzen können und so den Reaktor verstopfen.

Weiterhin ist seit Anfang der 70er Jahre ein Verfahren zur Reinigung von Salzwasser von Eiweißbelastungen und anderen organischen Verbindungen bekannt, bei dem die Fähigkeit des Eiweißes und anderer organischer Stoffe zur Schaumbildung ausgenutzt wird. Dabei wird das stark Natriumchlorid-haltige Wasser (Meerwasser) durch Luftzufuhr von unten in Bewegung versetzt, wodurch die Eiweißstoffe von der nach oben perlenden Luft mitgerissen werden und an der Oberfläche zu einer kräftigen Schaumbildung führen. Der sich dann an der Wasseroberfläche ansammelnde Schaum kann bei gleichzeitiger Entfernung der stickstoffhaltigen organischen Verbindungen abgeschöpft werden. Der Wasserzulauf solcher Anlagen befindet sich unterhalb der Wasseroberfläche, so daß das einströmende Salzwasser nicht mit der gebildeten Schaumschicht in Kontakt kommt. Derartige Anlagen sind nur für Meerwasseraquarien geeignet, bei denen die Filterung über eine Filtersäule erfolgt, so daß das stark Natriumchlorid-haltige Wasser kontinuierlich durch Zu- und Ablauf ausgetauscht wird. Dieses Verfahren läßt sich jedoch nicht auf Süßwasser anwenden, da dieses eine höhere Grenzflächenspannung und eine niedrigere Dichte als Natriumchlorid-haltiges Wasser aufweist.

Weiterer Nachteil dieses Verfahrens ist, daß die Luftzufuhr ebenfalls von unten, und zwar durch Einblasen in das Wasser erfolgt, wofür Energie aufgewandt werden muß.

Ferner offenbart US 4,988,436 eine Filteranlage für ein Aquarium mit zwei Reinigungsstufen, nämlich einer biologischen Filterstufe über einen Rieselfilter der herkömmlichen Art sowie einer Abschäumstufe. Das Wasser wird zunächst über ein Rieselfilter geleitet und dort von Bakterien gereinigt. Danach wird das Wasser einer Kammer zugeführt, in der eine Abschäumung stattfindet, indem von unten, also der Fließrichtung des Wassers entgegengesetzt, Luft in das Wasser geblasen wird. Auf der Wasseroberfläche in der Kammer bildet sich eine Schaumschicht, in der sich Verunreinigungen ablagern.

Nachteilig an diesem Verfahren ist, daß auch hier die Fließgeschwindigkeit des Wassers und damit der Wasserdurchsatz der Anlage von der Reinigung über das Rieselfilter abhängig sind. Für eine effektive biologische Reinigung muß das Wasser sehr langsam über das Rieselfilter geschickt werden. Außerdem ist zum Einblasen der Luft in der zweiten Reinigungsstufe Energie notwendig, denn die Luft wird dem herablaufenden Wasser entgegengeblasen.

Zwei weitere Filteranlagen, ebenfalls für Aquarien, sind in US 5,078,867 und US 5,084,164 offenbart. Beide Anlagen umfassen zwei Reinigungsstufen, eine biologische sowie eine Abschäumstufe. Wie auch in der oben erwähnten US 4,988,436 erfolgt bei der US 5,084,164 jedoch zum Abschäumen ein Einblasen der Luft von unten, d.h. es ist Energie für das Zuführen der Luft erforderlich. Auch bei dieser Anlage erfolgt die Bildung der Schaumschicht auf der Wasseroberfläche. Bei der US 5,087,867 wird Luft durch ein rotierendes Rad zugeführt, das sich aus dem Wasser heraus und wieder in dieses hineindreht. Für die Rotation des Rades ist zusätzlich Energie erforderlich, die dem System zugeführt werden muß. Beide Anlagen sind technisch und konstruktiv aufwendig, da sie u.a. ein umfangreiches Kammer- und Rohrleitungssystem zum Ein- und Umleiten des zu reinigenden Wassers erfordern. Außerdem ist zusätzliches Einbringen von Energie für die Belüftung des Wassers nötig.

Der Erfindung liegt demgegenüber die Aufgabe zugrunde, ein Verfahren und eine Einrichtung zur Reinigung/Filtration von Wasser, hauptsächlich von Süßwasser, zu schaffen, mit denen ein hoher Wasserdurchsatz unter Gewährleistung eines optimalen Reinigungs- bzw. Filtrationseffekts erreichbar ist, wobei die Einrichtung gegenüber herkömmlichen Einrichtungen/Filteranlagen eine deutlich geringere Baugröße aufweisen und damit geringere Herstellungs-, Betriebs- und Wartungskosten verursachen soll.

Diese Aufgabe wird bei dem Verfahren der eingangs genannten Art dadurch gelöst, daß das Wasser einer sich oberhalb des Abzugs aufbauenden Sammeloberfläche zugeführt wird und die Wasserzuführung in einer ausreichend großen Menge erfolgt, um unter Bindung eines Großteils der organischen und anorganischen Bestandteile und Nutzung deren zumindest überwiegend gegebener Abschäumbarkeit sowohl bei Durchströmung des Reaktors zur Luftblasenbildung im Rieselstrom als auch, unter Nutzung dieser Luftblasen, zur Schaumbildung auf der Sammeloberfläche zu führen, und daß sich hier bildender Schaum unter Druckausgleich in einem Bereich oberhalb der Sammeloberfläche abgezogen wird.

Dadurch, daß das Wasser mit sehr hoher Fließgeschwindigkeit über das Filter geschickt wird, wird das Wasser von den Füllkörpern "zerschlagen", d.h. die Wasseroberfläche wird vergrößert und das Wasser vermehrt mit Luft vermischt; es entstehen Luftblasen. Im Wasser vorhandene hydrophobe, d.h. wasserabstoßende Teilchen, lagern sich bevorzugt an der Wasseroberfläche, also an den Luftblasen ab. Die Teilchen verbinden sich miteinander, wodurch sich eine relativ stabile sogenannte Kahmhaut bildet. Die von der Kahmhaut umgebenen Luftblasen werden mit dem Wasser nach unten gerissen, bis sie auf die Wasseroberfläche treffen, die die Sammeloberfläche bildet. Dort setzen sich die durch die Kahmhaut stabilisierten Blasen ab und bilden eine Schaumschicht. Auch Blasen, die - bei genügendem Füllungsgrad im Sammelbecken - unter die Wasseroberfläche mitgerissen werden, steigen aufgrund der Auftriebskraft wieder nach oben und setzen sich ebenfalls an der Sammeloberfläche ab. Solche Kahmhautblasen können einen Durchmesser von bis zu 3 cm erreichen und an der Luft mehrere Stunden stabil sein.

Die so entstandene Schaumschicht wirkt als sehr effektives Filter, das neben anorganischen und organischen Verunreinigungen auch Lebewesen von Größen zwischen kleinsten Bakterien bis hin zu Insekten wie beispielsweise Fliegen aufnimmt und aus dem Wasser entfernt. Anders als bei einem Rieselfilter werden die Verunreinigungen dem Wasser durch Abziehen des Schaumes endgültig entzogen und können nicht wieder in den Kreislauf gelangen. Da die Luft vom Wasser mitgerissen wird, ist kein zusätzlicher Energieaufwand für das Einblasen der Luft erforderlich.

Somit können in Erfüllung der Aufgabenstellung in kurzer Zeit abschäumbare Stoffe wie Stickstoffverbindungen (Proteine, Zellulose), kleinste Algen, unbenetzbare Teilchen wie z.B. Schalen der Planktonkrebse wie auch Krankheitskeime und Parasiten im wasser befindlicher Fische aus dem Wasser entfernt werden. zusätzlich wird bei Einsatz des erfindungsgemäßen Verfahrens zur Reinigung von mit Fischbesatz versehenen Süßwasserteichen die Algenblüte auch bei starker Sonneneinstrahlung vermindert, da das erfindungsgemäße Reinigungsverfahren äußerst effektiv arbeitet und einen sehr hohen Wasserdurchsatz ermöglicht. Die Schaumschicht arbeitet als Filter, das Teilchen aus dem vorbeiströmenden Wasser herausfiltert. Dies führt weiterhin zu einer erheblich geringeren Bakterienpopulation und zur Herabsetzung der damit verbundenen Belastung und Sauerstoffzehrung im Wasser. Eine nach dem erfindungsgemäßen Verfahren arbeitende Filteranlage ist zudem sofort nach Aufbau der Schaumschicht, die sich in kürzester Zeit bildet, einsatzbereit. Die entstehende Schaumschicht setzt im übrigen die Wassersinkgeschwindigkeit des durch sie hindurchfließenden Wassers weiter herab, wodurch sich die Schaumbildung verstärkt. Des weiteren kann der bei der Reinigung anfallende und abgeschöpfte Schaum gesammelt und als Dünger verwendet werden.

Vorteilhafterweise wird das Wasser bereits vor dem Auftreffen auf das Füllkörpermaterial beispielsweise durch eine Lochplatte verrieselt, damit das zufließende Wasser gleichmäßig auf die Riesel- bzw. Füllkörper verteilt wird, wodurch die Höhe der Füllkörperschicht verringert werden kann.

In einer weiteren vorteilhaften Ausführungsform wird dem Wasser bei der Durchströmung der Filteranlage zusätzlich Luft zugeführt. Dadurch wird die Luftblasenbildung gefördert. Ebenso kann dem Wasser ein Schaumbildner zugesetzt werden, was die Blasen- und Schaumschichtbildung ebenfalls erhöht.

Das Verhältnis von Wasser zu Luft ist abhängig von der Art der Füllkörper in dem Filter. Eine besonders gute Abschäumung erfolgt bei Verwendung von oberflächengeschlossenen Vollkörpern wie bei Hydrokulturen verwendetem Tongranulat als Füllkörper. Das Verhältnis Wasser : Luft ist dann bevorzugterweise ungefähr 1:1.

Zwischen den einzelnen Granulatkörnern bilden sich dabei Luftkammern aus, an denen das zu reinigenden Wasser vorbeifließt. Beim Vorbeifließen werden einigen der Luftkammern mitgerissen, wodurch wiederum Blasen entstehen, die sich in der Schaumschicht absetzen.

In einer weiteren bevorzugten Ausführungsform umfapt das Verfahren die Reinigung des Wassers durch bakteriellen Abbau und Abschäumung in einer Stufe. Es erfolgt also sowohl eine bakterielle Reinigung durch die auf den Füllkörpern befindlichen Bakterien als auch die Reinigung durch die Schaumschicht. Zur Ausbildung einer Bakterienpopulation ist eine Anlaufphase notwendig. Nimmt man eine Filteranlage nach der vorliegenden Erfindung in Betrieb, wird in den ersten ca. 10 Tagen eine Reinigung nur durch die Schaumschicht erfolgen. Erst dann ist eine ausreichende Bakterienpopulation entstanden, die einen Teil der Reinigung des Wassers übernimmt.

Die Fließgeschwindigkeit ist allerdings nach oben begrenzt, denn durch die Fallenergie der Wassertropfen darf die gebildete Schaumschicht nicht zerstört werden. Wie hoch die Fließgeschwindigkeit im Einzelfall zu wählen ist, hängt von den Dimensionen der Filteranlage sowie der Art der verwendeten Füllkörper ab. Bei entsprechender Einstellung bleibt die gebildete Schaumschicht in einer mehrere Zentimeter ausmachenden Höhe, die auch über 20 cm betragen kann, stabil. Die Einstellung der genannten Parameter muß so erfolgen, daß die herabsinkenden Wassertropfen und/ oder Wasserströme die gebildete Schaumschicht infolge ihrer Fallenergie nicht zerstören.

Die gestellte Aufgabe wird verwirklicht mit einer mit Füllkörpermaterial gefüllten Filteranlage zur Reinigung von Wasser, umfassend mindestens eine Beschickungseinrichtung für zu reinigendes, organische und/oder anorganische Bestandteile enthaltendes Wasser sowie mindestens einen Auslaß zum Entfernen des gereinigten Wassers, wobei die Filteranlage oberhalb des Auslasses einen Bereich zur Ausbildung einer Sammeloberfläche aufweist und oberhalb desselben ein Abzug zum Abziehen des Schaums vorgesehen ist.

Der Abzug zum Abziehen des Schaumes sorgt, abgesehen davon, dap durch ihn die Verunreinigungen abgeführt werden, für einen Druckausgleich im Filter. Durch den Staudruck des Wassers könnte sonst die Schaumschicht zerstört werden, wenn nicht auf anderem Wege für einen Druckausgleich gesorgt wird.

Vorteilhafterweise kann die Filteranlage turmartig aufgebaut sein, d.h. ihre Höhe sollte größer als ihre Breite/Länge sein. So kann zum Beispiel eine erfindungsgemäße Filteranlage eine Höhe von 2 m und eine Grundfläche von 0,16 m² aufweisen. Mit einer solchen Filteranlage ist ein Durchflup zu reinigenden Wassers von ca. 5.000 1 pro Stunde möglich. Diese Werte sind erheblich höher als die herkömmlicher, gleich großer Filteranlagen mit ausschließlicher Rieselfunktion.

Zur Erhöhung des Sauerstoffgehaltes des Wassers können im mittleren Bereich der Filteranlage zusätzlich Luftein- und -auslässe vorgesehen sein. Dies erhöht die Reinigungsleistung.

Zur Erhöhung der Sauerstoffzufuhr zu dem zu reinigenden Wasser können die Füllkörper als oberflächenvergröperte Rieselkörper ausgebildet sein. Dies hat zudem den Vorteil, daß sich auf diesen Rieselkörpern Bakterienbesatz bilden kann, der in bekannter Weise zusätzlich als Filter für organische Stoffe arbeitet. Die in den mechanischen Elementen vorhandenen Bakterien tragen also neben der Schaumschicht zusätzlich zum Abbau von unerwünschten organischen Verbindungen bei.

Vorteilhafterweise kann die Energie des herabströmenden Wassers vor dem Auftreffen auf die Schaumschicht gesenkt werden, so daß einer Zerstörung der Schaumschicht vorgebeugt wird.

Dazu muß die Sinkgeschwindigkeit des hinabströmenden Wassers vor Erreichen der Schaumschicht gebremst werden. Dies wird dadurch erreicht, daß die Wassersinkgeschwindigkeit des aus dem Einlauf austretenden zu reinigenden Wassers vor Auftreffen auf die Schaumschicht durch mechanische Elemente eingestellt wird. Selbstverständlich müssen die mechanischen Elemente selbst wasser- und/oder schaumdurchlässig ausgebildet sein.

Solche mechanischen Elemente, die die Wassersinkgeschwindigkeit vor Auftreffen auf die Schaumschicht herabsetzen, können vorteilhafterweise als siebartige Loch- bzw. Gitterplatten, als granulatartige Körper wie z.B. Kieselsteine, Tongranulate oder als bereits bekannte Rieselkörper ausgebildet sein. Es ist auch ohne weiteres möglich, die Füllkörper als durchbrochene Bälle, Plastikröhren, Bürsten, Siebe oder lockenwicklerähnliche Gebilde auszuformen. Wesentlich ist die Fähigkeit, die Wassersinkgeschwindigkeit herabzusetzen und einen Wasserdurchlauf zu ermöglichen.

Zur weiteren Verminderung von Turbulenzen können in und/oder unter der Schaumschicht mechanische Elemente wie z.B. Rieselkörper, Lochplatten, Siebe od. dgl. angeordnet sein.

Vorteilhafterweise kann der im oberen Bereich der Filteranlage angeordnete Einlauf siebartig ausgebildet sein und das Wasser unter Anreicherung mit Sauerstoff nach Art einer Dusche in die Anlage hineinsprühen. Durch eine solche Versprühung des zu reinigenden Wassers kann eine höhere Filterleistung erreicht werden. Der siebartige Aufbau kann durch Gittersiebe, Lochflächen mit einer Vielzahl von Wasserauslässen oder ähnlichen Konstruktionen erreicht werden.

Die Anlage kann sehr gut in der Natur, z.B. in einem Wasserfall eingesetzt werden. Bei einem derartigen Einsatz arbeitet die Anlage ohne zusätzliche Energie, da die Anlage direkt in den Wasserfall eingefügt ist. So ist eine Reinigung von Flüssen mit verhältnismäßig geringem Aufwand möglich. Der Schaum wird kontinuierlich durch einen Abzug abgezogen und in einem Behälter gesammelt. Der zunächst recht voluminöse Schaum zerfällt im Laufe der Zeit wieder, und der Rückstand kann von Zeit zu Zeit entfernt werden.

Weitere Vorteile und Ausführungsformen oder -möglichkeiten der Erfindung gehen aus der folgenden Beschreibung des in der schematischen Zeichnung dargestellten Ausführungsbeispiels hervor.

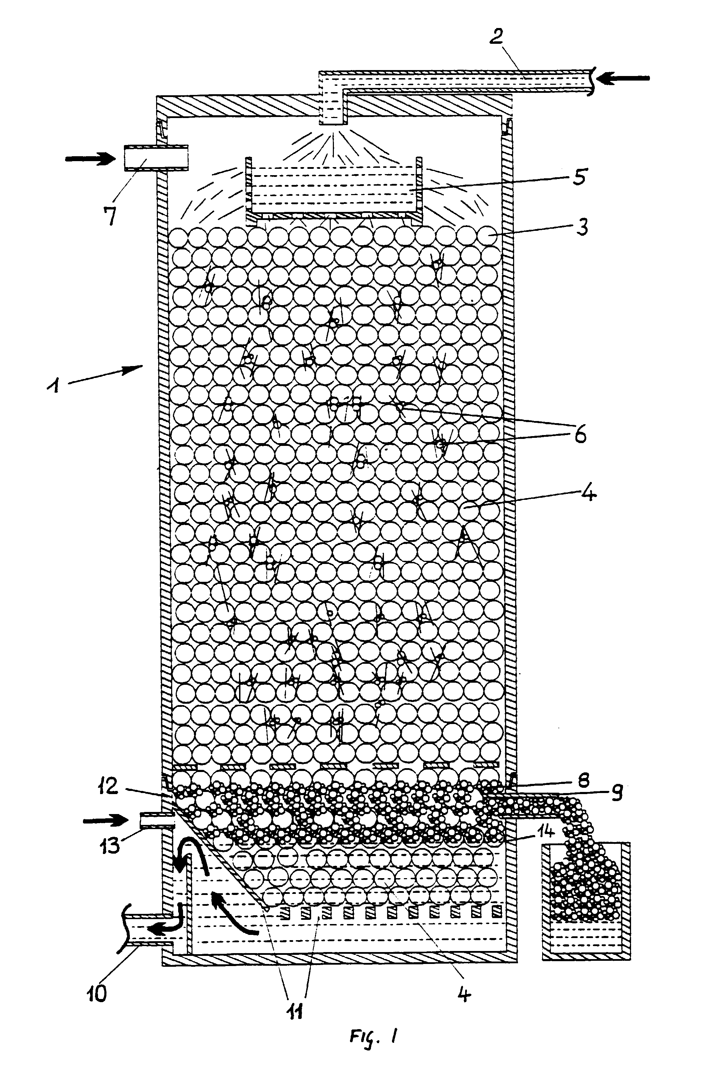

Die Figur zeigt einen Längsschnitt durch eine erfindungsgemäße Einrichtung in Form einer Filteranlage zur Reinigung eines mit Fischbesatz versehenen Süßwasserteiches.

Eine nach dem erfindungsgemäßen Verfahren arbeitende Einrichtung ist als turmartige Filteranlage 1 ausgebildet. Durch einen Einlauf 2 wird zu reinigendes Wasser über eine den Wasserfluß gleichmäßig verteilende siebartige Wanne 5 auf als mechanische Elemente 3 ausgebildete Rieselkörper 4 gesprüht, die übereinandergeschichtet auf einem rostartigen Element aufliegen, wobei sie - ggf. bis in ein Auffangbecken 12 reichend - übereinandergestapelt werden können. Das Wasser fließt dann über die kugelförmigen/kaskadenartigen Rieselkörper 4 nach unten, wobei es sich mit Luft vermischt. Zur Verhinderung eines Luftdefizits kann bei 7 zusätzlich Luft zugeführt/eingeblasen werden.

Das Verhältnis Luft : Wasser ist dabei abhängig von der Art der Füllkörper. Bei der Verwendung von Biobällen bzw. Duplerbällen beträgt das Verhältnis vorteilhafterweise 10:1 bis 15:1. Tongranulat bewirkt eine besonders gute Abschäumung, wenn das Luft-Wasser-Verhältnis etwa 1:1 beträgt.

Durch die aufeinander geschichteten Rieselkörper 4 wird die Fließ- bzw. Sinkgeschwindigkeit der Wasserströme bzw. Wassertropfen herabgesetzt und die Oberfläche des Wassers vergrößert. Es kommt zur Entstehung von Luftblasen 6. Im Wasser vorhandene hydrophobe, d.h. wasserabstoßende Teilchen und kleinste Schwebeteilchen lagern sich bevorzugt an der Wasseroberfläche, also auch an den Luftblasen 6 ab. Die Teilchen verbinden sich miteinander, wodurch sich eine relativ stabile sogenannte Kahmhaut bildet. Die so von der Kahmhaut umgebenen Luftblasen 6 werden mit dem Wasser nach unten gerissen, bis sie auf die Wasseroberfläche des sich in einem Auffangbecken 12 der Filteranlage 1 befindlichen Wassers treffen. Dort setzen sich die durch die Kahmhaut stabilisierten Blasen ab und bilden eine Schaumschicht 8. Auch Blasen, die unter die Wasseroberfläche mitgerissen werden, steigen aufgrund der Auftriebskraft wieder nach oben und setzen sich ebenfalls an der Sammeloberfläche 14 ab. Infolge der herabgesetzten Sinkgeschwindigkeit der herabfließenden, gezielt dosierten Wassermenge wird die Schaumschicht 8 nicht beeinträchtigt und es werden zu starke Turbulenzen im Schaumbereich vermieden. Dazu können auch in der Schaumschicht 8 selbst Körper wie z.B. Rieselkörper, durchbrochene Platten od. dgl. angeordnet werden. Teilweise werden auch organische Verunreinigungen von der sich auf der Oberfläche der Rieselkörper befindenden Bakterienschicht abgebaut. Am unteren Ende der Rieselkörperschicht 4 fließt das Wasser durch das rostartige Element in die gebildete Schaumschicht 8 hinein, in der dann die Wassersinkgeschwindigkeit weiter herabgesetzt wird und sich die Schaumbildung verstärkt. Beim Durchsatz durch den Schaum 8 werden von diesem die sich im Wasser befindenden Verunreinigungen aufgenommen.

Im Bereich der Schaumschicht 8 befindet sich in der Filteranlage 1 ein Abzug 9, aus dem der Schaum 8 kontinuierlich entnommen, d.h. abgezogen wird. Das gereinigte, sich im Auffangbecken 12 befindende Wasser wird durch einen Auslaß 10 in den Kreislauf Süßwasserteich - Filteranlage zurückgeführt. Dabei wird durch eine Abtrennung 11 ein nahezu gleichmäßiger Wasserstand ermöglicht. Natürlich wird das Wasser in einer Menge abgeführt, die dem angestrebten und mit der Größe der Anlage verträglichen Wasserstand angemessen ist.

Schließlich ist in der erfindungsgemäßen Filteranlage 1 im Bereich des Auffangbeckens ein Lufteinlaß 13 vorgesehen sein, der für Druckausgleich im abfließenden Wasser sorgt.

Die Wandung der Filteranlage 1 kann aus Hartstyropor gebildet sein und zur vereinfachten Montage bzw. Demontage in voneinander trennbare Bestandteile aufweisen.

## Patentansprüche

1. Verfahren zum Reinigen von Wasser, wobei zu reinigendes, organische und/oder anorganische Bestandteile enthaltendes Wasser in eine mit Füllkörpermaterial gefüllte Filteranlage (1) gebracht, in dieser unter Bildung eines Rieselstromes gereinigt und anschließend durch mindestens einen Auslaß (10) entfernt wird, **dadurch gekennzeichnet**, daß das Wasser einer sich oberhalb des Auslasses (10) aufbauenden Sammeloberfläche zugeführt wird und die Wasserzuführung in einer ausreichend großen Menge erfolgt, um unter Bindung eines Großteils der organischen und anorganischen Bestandteile und Nutzung deren zumindest überwiegend gegebener Abschäumbarkeit sowohl bei Durchströmung der Anlage (1) zur Luftblasenbildung im Rieselstrom als auch, unter Nutzung dieser Luftblasen, zur Schaumbildung auf der Sammeloberfläche zu führen, und daß sich hier bildender Schaum unter Druckausgleich in einem Bereich oberhalb der Sammeloberfläche abgezogen wird.

2. Verfahren nach Anspruch 1, **dadurch gekennzeichnet**, daß das Wasser vor dem Auftreffen auf das Füllkörpermaterial verrieselt wird.

3. Verfahren nach Anspruch 1 oder 2, **dadurch gekennzeichnet**, daß dem Wasser bei der Durchströmung der Filteranlage zusätzlich Luft zugeführt wird.

4. Verfahren nach einem der Ansprüche 1 bis 3, **dadurch gekennzeichnet**, daß dem Wasser zusätzlich ein Schaumbildner zugesetzt wird.

5. Verfahren nach einem der Ansprüche 1 bis 4, **dadurch gekennzeichnet**, daß bei Verwendung von oberflächengeschlossenen Vollkörpern wie Tongranulat als Füllkörper das Verhältnis Wasser : Luft ungefähr 1:1 ist.

6. Verfahren nach einem der Ansprüche 1 bis 5, **dadurch gekennzeichnet**, daß das Verfahren die Reinigung des Wassers durch bakteriellen Abbau und Abschäumung in einer Stufe umfaßt.

7. Mit Füllkörpermaterial (3, 4) gefüllte Filteranlage (1) zur Reinigung von Wasser, umfassend mindestens eine Beschickungseinrichtung (2) für zu reinigendes, organische und/ oder anorganische Bestandteile enthaltendes Wasser sowie mindestens einen Auslaß (10) zum Entfernen des gereinigten Wassers, **dadurch gekennzeichnet**, daß die Filteranlage oberhalb des Auslasses (10) einen Bereich zur Ausbildung einer Sammeloberfläche (14) aufweist und oberhalb desselben ein Abzug (9) zum Abziehen des sich bildenden Schaums (8) vorgesehen ist.

8. Filteranlage nach Anspruch 7, **dadurch gekennzeichnet**, daß in Strömungsrichtung vor dem Füllkörpermaterial (3, 4) Verrieselungsmittel (5) angeordnet sind.

9. Filteranlage nach einem der Ansprüche 7 oder 8, **dadurch gekennzeichnet**, daß die Filteranlage (1) turmartig ausgebildet ist, wobei ihre Höhe größer als ihr Querschnitt ist.

10. Filteranlage nach einem der Ansprüche 7 bis 9, **dadurch gekennzeichnet**, daß zur Erhöhung der Abschäumleistung in der Filteranlage (1) zusätzlich Luftein- und -auslässe (7) vorgesehen sind.

11. Filteranlage nach einem der Ansprüche 7 bis 10, **dadurch gekennzeichnet**, daß das Füllkörpermaterial als oberflächenvergrößerte Rieselkörper (3) ausgebildet ist.

12. Filteranlage nach einem der Ansprüche 7 bis 11, **dadurch gekennzeichnet**, daß in und/ oder unter der Schaumschicht (8) zur Verminderung von Turbulenzen mechanische Elemente (4) angeordnet sind.

13. Verwendung der Filteranlage nach einem der Ansprüche 7 bis 12 in einem Wasserfall.

## Claims

1. Method for purifying water, the water which is to be cleaned and which contains organic and/or inorganic particles being fed to a filtration arrangement (1) filled with filler material, being purified as a result of forming a trickling stream and subsequently being removed through at least one outlet (10), **characterized in** that the water is fed to a collection surface forming above the outlet (10) and that the water is supplied in an amount sufficient to cause the formation of bubbles in the trickle stream while flowing through the arrangement (1) and also the formation of foam on the collection surface by utilizing these bubbles, all the while binding a major part of the organic and inorganic constituents and by using their at least predominant ability to be skimmed off, and in that the foam forming here is drawn off into an area above the collection surface by means of pressure compensation.

2. Method according to claim 1, **characterized in** that the water is sprinkled before reaching the filler material.

3. Method according to claim 1 or 2, **characterized in** that air is additionally added to the water as the latter flows through the filter arrangement.

4. Method according to any of the claims 1 to 3, **characterized in** that a foaming agent is additionally added to the water.

5. Method according to any of the claims 1 to 4, **characterized in** that when using full elements with closed surfaces such as clay granulate as filler elements, the water:air ratio amounts to approximately 1:1.

6. Method according to any of the claims 1 to 5, **characterized in** that the method comprises the purification of the water by means of bacterial decomposition and skimming in one step.

7. Filter arrangement (1) for the purification of water being filled with filler material (3,4) and comprising at least one feeding device (2) for water which is to be cleaned and which contains organic and/or inorganic particles, and at least one outlet (10) for removing the purified water, **characterized in** that the filter arrangement has an area for forming a collection surface (14) located above the outlet (10), that and a discharge (9) for drawing off the foam (8) is provided above said outlet.

8. Filter arrangement according to claim 7, characterized in that in the direction of flow, sprinkling means (5) are located before the filter material (3,4).

9. Filter arrangement according to claim 7 or 8,
characterized in that the filter arrangement (1) is tower-shaped, its height being larger than its diameter.

10. Filter arrangement according to one of the claims 7 to 9, **characterized in** that air inlets and outlets (7) are provided in the filter arrangement (1) to increase the skimming power.

11. Filter arrangement according to one of the claims 7 to 10, **characterized in** that the filler material is provided as trickle elements (3) with enlarged surface areas.

12. Filter arrangement according to one of the claims 7 to 11, **characterized in** that mechanical elements (4) are arranged in and/or below the foam layer (8) to reduce turbulence.

13. Use of the filter arrangement according to one of claims 7 to 12 in a waterfall.

## Revendications

1. Procédé pour purifier l'eau, dans lequel de l'eau destinée à être purifiée, contenant des constituants organiques et/ou minéraux, est placée dans une installation (1) de filtration, remplie d'un matériau de lit de contact, y est purifiée avec formation d'un courant de ruissellement, puis est éliminée par au moins une sortie (10), caractérisé en ce que l'eau est amenée à une surface collectrice qui se constitue au-dessus de la sortie (10), et que l'amenée de l'eau est réalisée à un débit suffisamment grand pour, par fixation d'une majorité des constituants organiques et minéraux, et utilisation de leur pouvoir d'écumage, au moins essentiellement prédéfini, conduire tant, lors de la traversée de l'installation (1), à la formation de bulles d'air dans le courant de ruissellement, que, par utilisation de ces bulles d'air, à la formation de mousse sur la surface collectrice, et que la mousse qui se forme ici est, avec une compensation de pression, enlevée dans une zone située au-dessus de la surface collectrice.

2. Procédé selon la revendication 1, caractérisé en ce que l'eau est mise en ruissellement avant son impact avec le matériau du lit de contact.

3. Procédé selon la revendication 1 ou 2, caractérisé en ce qu'on envoie en outre de l'air à l'eau lors de son passage à travers l'installation de filtration.

4. Procédé selon l'une des revendications 1 à 3, caractérisé en ce qu'on ajoute en outre, à l'eau, un agent moussant.

5. Procédé selon l'une des revendications 1 à 4, caractérisé en ce que, lors de l'utilisation d'éléments pleins à surface fermée, comme par exemple un granulé d'argile en tant que matériau de lit de contact, le rapport de l'eau à l'air est d'environ 1:1.

6. Procédé selon l'une des revendications 1 à 5, caractérisé en ce que le procédé englobe, dans un seul étage, la purification de l'eau par dégradation bactérienne et écumage.

7. Installation (1) de filtration, remplie d'un matériau de lit de contact (3, 4), destinée à purifier l'eau, comportant au moins un dispositif d'alimentation (2) pour l'eau à purifier, contenant des constituants organiques et/ou minéraux, et au moins une sortie (10) pour éliminer l'eau purifiée, caractérisée en ce que l'installation de filtration comporte au-dessus de la sortie (1) une zone destinée à former une surface collectrice (14) et que, au-dessus de cette dernière, un canal de décharge (9) est prévu pour évacuer la mousse (8) qui se forme.

8. Installation de filtration selon la revendication 7, caractérisée en ce que des moyens de ruissellement (5) sont disposés en amont du matériau du lit de contact (3, 4), quand on regarde dans la direction de l'écoulement.

9. Installation de filtration selon l'une des revendications 7 ou 8, caractérisée en ce que l'installation de filtration (1) est conçue comme une tour, dont la hauteur est plus grande que la section transversale.

10. Installation de filtration selon l'une des revendications 7 à 9, caractérisée en ce que, pour augmenter le pouvoir d'écumage, on prévoit en outre dans l'installation de filtration (1) des orifices d'entrée et de sortie (7) pour l'air.

11. Installation de filtration selon l'une des revendications 7 à 10, caractérisée en ce que le matériau du lit de contact est conçu comme des éléments de ruissellement (3), ayant une aire accrue.

12. Installation de filtration selon l'une des revendications 7 à 11, caractérisée en ce que des éléments mécaniques (4) sont, pour diminuer les turbulences, disposés dans la couche de mousse (8) et/ou en-dessous de cette dernière.

13. Utilisation de l'installation de filtration selon l'une des revendications 7 à 12 dans une chute d'eau.
